# NEUE EUROPÄISCHE PATENTSCHRIFT

(11) **EP 2 215 317 B2**
(45) Veröffentlichungstag und Bekanntmachung des Hinweises auf die Entscheidung über den Einspruch: **11.07.2018**
(45) Hinweis auf die Patenterteilung: 11.03.2015
(21) Anmeldenummer: 08858244.0
(22) Anmeldetag: 12.11.2008
(51) Int. Cl.: E04F 13/08

(54) **DÄMMSTOFFHALTER UND VERFAHREN ZUM BEFESTIGEN EINER DÄMMSTOFFPLATTE**
INSULATION HOLDER AND METHOD FOR ATTACHING AN INSULATION PLATE
DISPOSITIF DE MAINTIEN DE MATÉRIAU ISOLANT ET PROCÉDÉ DE FIXATION D'UNE PLAQUE DE MATÉRIAU ISOLANT

(30) Priorität: 06.12.2007 DE 102007058773
(43) Veröffentlichungstag der Anmeldung: 11.08.2010
(73) Patentinhaber: fischerwerke GmbH & Co. KG, 72178 Waldachtal (DE)
(72) Erfinder: RENZ, Jürgen, 72202 Nagold (DE)
(86) Internationale Anmeldenummer: PCT/EP2008/009556
(87) Internationale Veröffentlichungsnummer: WO 2009/071168

(56) Entgegenhaltungen:
- EP-A- 1 548 298
- EP-A- 1 798 358
- EP-A1- 0 297 053
- EP-A1- 0 675 293
- EP-A1- 1 046 764
- EP-A2- 0 811 773
- EP-A2- 2 068 007
- DE-A1- 2 712 670
- DE-A1- 3 302 272
- DE-A1- 3 400 279
- DE-A1- 19 648 823
- DE-A1-102008 010 606
- DE-U1- 8 903 833
- DE-U1- 9 409 422
- DE-U1- 20 301 891
- DE-U1- 29 908 107
- US-A- 4 930 959
- US-A- 5 082 412
- US-A- 5 082 412
- US-A- 5 626 451
- US-A- 5 688 092

## Beschreibung

Die Erfindung betrifft einen Dämmstoffhalter mit den Merkmalen des Oberbegriffs des Anspruchs 1.

Dämmstoffhalter sind an sich bekannt, beispielhaft wird auf die Offenlegungsschrift DE 196 48 828 A1 hingewiesen. Dämmstoffhalter dienen zur Befestigung von Dämmmaterial wie Dämmstoffplatten, Dämmstoffmatten oder dgl. an einer Gebäudewand oder allgemein an einem Ankergrund. Vereinfachend wird nachfolgend nur von Dämmstoffplatten gesprochen werden. Die bekannten Dämmstoffhalter weisen einen Hohlschaft auf, der eine Befestigungsschraube zur Befestigung des Dämmstoffhalters am Ankergrund aufweist. Der Hohlschaft des Dämmstoffhalters wird in ein vorbereitetes Bohrloch in der Dämmstoffplatte eingebracht und mit der Befestigungsschraube am oder im Ankergrund befestigt. Üblicherweise weist der Hohlschaft einen Halteteller an seinem hinteren, d.h. dem Ankergrund abgewandten Ende auf, der die Dämmstoffplatte großflächig übergreift. Der Halteteller ist üblicherweise ein lochscheibenförmiges Element, das Durchbrüche aufweisen kann. Siehe auch US 5 082 412 A. Aus dem Gebrauchsmuster DE 89 03 833 U1 ist eine Distanzschraube mit einer Hülse bekannt, zur Abstandseinstellung von zwei Bauelementen. Das Gebrauchsmuster DE 94 09 422 U1 zeigt eine Befestigungsvorrichtung, um Platten an einer Wand zu dieser festzulegen.

Diese Aufgabe wird erfindungsgemäß durch einen Dämmstoffhalter mit den Merkmalen des Anspruchs 1 gelöst. Der erfindungsgemäße Dämmstoffhalter weist einen Hohlschaft zur Aufnahme einer Befestigungsschraube auf. Die Befestigungsschraube ist insbesondere eine an sich übliche Holz- oder Spanplattenschraube mit einem Schraubenkopf. Der Hohlschaft des erfindungsgemäßen Dämmstoffhalters weist eine Rückbewegungssperre auf, die die im Hohlschaft aufgenommene Befestigungsschraube gegen eine Bewegung aus dem Hohlschaft heraus sperrt. Die Rückbewegungssperre hält den Hohlschaft in axialer Richtung gegen eine Bewegung in Richtung des Ankergrunds. Wird die Befestigungsschraube in den Ankergrund eingeschraubt und anschließend wieder eine oder einige Umdrehungen herausgedreht, bewegt sich der Hohlschaft beim Herausdrehen der Befestigungsschraube mit der Befestigungsschraube mit, d.h. vom Ankergrund weg. Auf diese Weise ermöglicht die Erfindung die Einstellung eines Abstands des Dämmstoffhalters vom Ankergrund. Insbesondere hält die Rückbewegungssperre die Befestigungsschraube im Wesentlichen spielfrei in axialer Richtung. Mit einem Einschrauben der Befestigungsschraube in den Ankergrund ist einerseits ein direktes Einschrauben, beispielsweise in Holz als Ankergrund gemeint. Andererseits ist aber auch ein Einschrauben in einen Dübel oder dergleichen gemeint, der mit der Schraube oder zuvor in den Ankergrund eingebracht wird.

Die Befestigungsschraube ist drehbar im Hohlschaft, damit der Dämmstoffhalter sich nicht mit der Befestigungsschraube mitdreht. Die Rückbewegungssperre kann federbeaufschlagt oder federelastisch sein. Die Rückbewegungssperre ist betätigbar, d.h. aus einer nicht sperrenden in die sperrende Stellung verbringbar.

Die Erfindung sieht vor, dass die Rückbewegungssperre durch das Einbringen des Hohlschafts in das vorbereitete Bohrloch in der Dämmstoffplatte in die sperrende Stellung gebracht wird. In einer nicht-sperrenden Stellung steht die Rückbewegungssperre seitlich aus dem Hohlschaft des Dämmstoffhalters vor und wird beim Einbringen in das Bohrloch in der Dämmstoffplatte in den Hohlschaft in die sperrende Stellung gedrückt, in der die Rückbewegungssperre die im Hohlschaft aufgenommene Befestigungsschraube hintergreift.

Die Rückbewegungssperre hintergreift einen Schraubenkopf der im Hohlschaft aufgenommenen Befestigungsschraube. Dadurch ist der erfindungsgemäße Dämmstoffhalter mit an sich allen üblichen Befestigungsschrauben verwendbar, die einen Schraubenkopf aufweisen. Es ist keine spezielle Schraube notwendig.

Die Erfindung sieht eine hakenförmige Rückbewegungssperre vor, die in einer Öffnung einer Wand des Hohlschafts des Dämmstoffhalters angeordnet ist. Diese Ausgestaltung ermöglicht eine einstückige Ausbildung der Rückbewegungssperre mit dem Hohlschaft und eine Herstellung beispielsweise durch Spritzgießen aus Kunststoff in einem Arbeitsgang.

Der Hohlschaft weist einen Halteteller auf, der die Dämmstoffplatte auf deren dem Ankergrund abgewandter Außenseite übergreift und die Dämmstoffplatte am Ankergrund hält.

Die Erfindung sieht einen Anker an einer Außenseite des Hohlschafts vor, der den Hohlschaft in der Dämmstoffplatte verankert. Der Anker ist beispielsweise als Widerhaken ausgebildet, der beim Einbringen des Hohlschafts in das vorbereitete Bohrloch der Dämmstoffplatte in die Dämmstoffplatte eindringt und den Hohlschaft gegen eine Bewegung aus der Dämmstoffplatte heraus sperrt. Der Hohlschaft des Dämmstoffhalters ist durch den Anker axial zumindest in einer Richtung gehalten. Umgekehrt ist auch die Dämmstoffplatte axial am Hohlschaft gehalten gegen eine Bewegung in Richtung zum Ankergrund. Durch Einschrauben der im Hohlschaft aufgenommenen Befestigungsschraube in den Ankergrund lässt sich der Hohlschaft in das vorbereitete Bohrloch in der Dämmstoffplatte einziehen. Die Dämmstoffplatte liegt am Ankergrund an, d.h. sie wird vom Ankergrund abgestützt. Ist der Hohlschaft in die Dämmstoffplatte eingezogen, kann durch Herausdrehen der Befestigungsschraube um eine oder einige Umdrehungen der Hohlschaft und mit ihm zusammen die Dämmstoffplatte vom Ankergrund abgehoben werden, d.h. es ist ein Abstand der Dämmstoffplatte vom Ankergrund einstellbar.

Die Erfindung wird nachfolgend anhand eines in der Zeichnung dargestellten Ausführungsbeispiels näher erläutert. Die drei Figuren zeigen einen Dämmstoffhalter gemäß der Erfindung im Achsschnitt in drei aufeinander folgenden Montageschritten.

Der in der Zeichnung dargestellte, erfindungsgemäße Dämmstoffhalter 1 weist einen rohrförmigen Hohlschaft 2 auf, der sich zu einem vorderen Ende hin konisch verjüngt. Innen verjüngt sich der Hohlschaft 2 mit einer konischen Ringfläche 3 von einem größeren Durchmesser in einem hinteren Teil des Hohlschaft 2 auf einen kleineren Durchmesser im vorderen Teil des Hohlschafts 2.

An seinem hinteren Ende weist der Hohlschaft 2 einen kreisscheibenförmigen Halteteller 4 auf. Der Halteteller 4 weist ein Mittelloch auf, das eine Mündung des Hohlschafts 2 bildet. Außerdem weist der Halteteller 4 das Mittelloch umgebende Aussparungen 5 auf, die allerdings für die Erfindung nicht von Bedeutung sind.

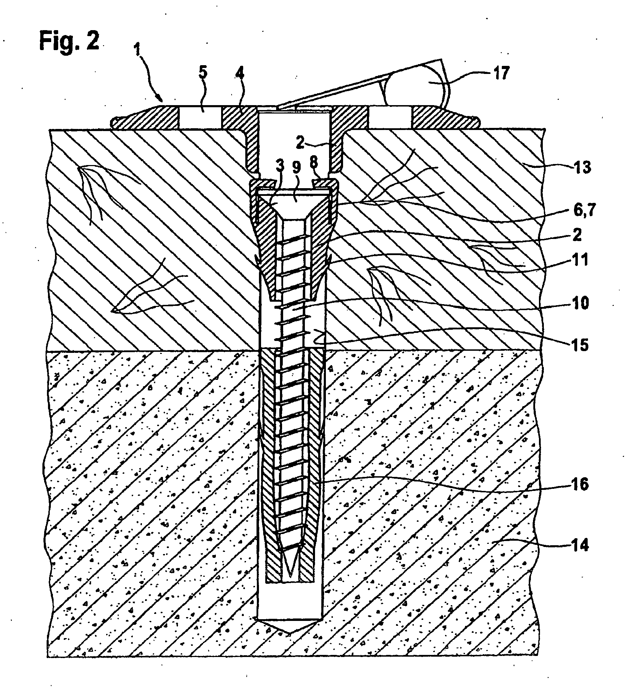

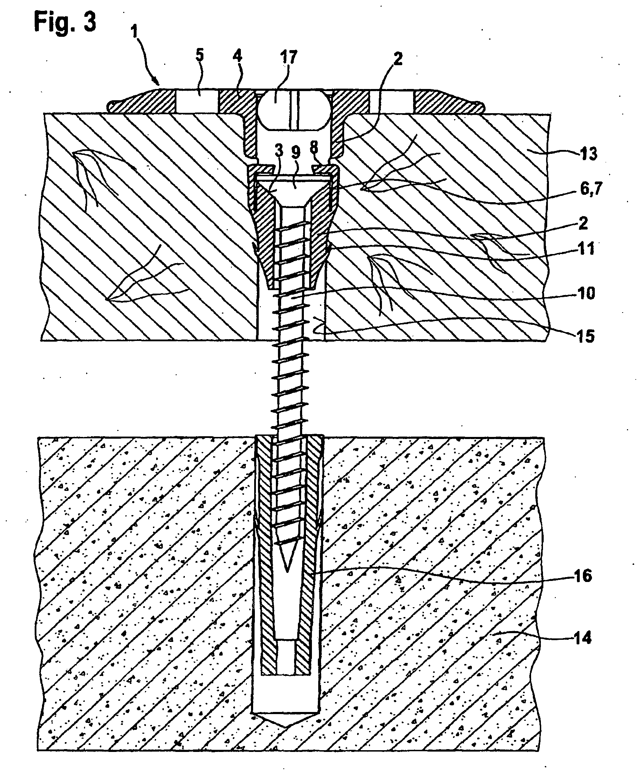

An zwei einander gegenüberliegenden Stellen weist der Hohlschaft 2 zwei abgewinkelte, d.h. hakenförmige Rückbewegungssperren 6 auf. Die Rückbewegungssperren 6 verlaufen zunächst als Schaft 7 schräg nach hinten außen und anschließend als Abwinklung 8 nach innen. Die Abwinklung 8 der Rückbewegungssperren 6 befindet sich kurz hinter der konischen Ringfläche 3, so dass ein Schraubenkopf 9 zwischen der konischen Ringfläche 3 und den nach innen stehenden Abwinklungen 8 der Rückbewegungssperren 6 aufgenommen werden kann, wie es in Figuren 2 und 3 zu sehen ist. Auch wenn in der Zeichnung ein Senkkopf als Schraubenkopf 9 gezeichnet ist, ist diese Kopfform nicht zwingend für die Erfindung. An ihrem der Abwinklung 8 fernen Fuß gehen die Schäfte 7 der Rückbewegungssperren 6 einstückig in die Wand des Hohlschafts 2 über. Die Schäfte 7 sind elastisch federnd. Die Anzahl von zwei Rückbewegungssperren 6 ist nicht zwingend für die Erfindung, der Dämmstoffhalter 1 kann auch mehr als zwei Rückbewegungssperren 6 aufweisen, evtl. genügt eine Rückbewegungssperre 6 (nicht dargestellt).

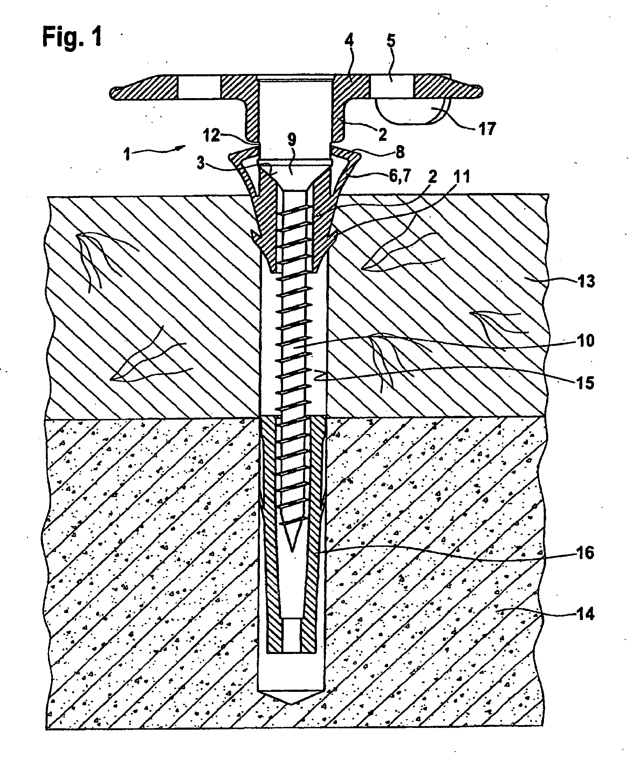

Der Hohlschaft 2 weist schräg nach außen hinten abstehende widerhakenförmige Anker 11 auf. Die Anker 11, die Rückbewegungssperren 6, der Hohlschaft 2 und der Halteteller 4 sind miteinander einstückige Bestandteile des Dämmstoffhalters 1, sie sind in einem Arbeitsschritt durch Spritzgießen aus Kunststoff hergestellt. Die Rückbewegungssperren 6 sind in rechteckigen, als Fenster 12 bezeichneten Aussparungen der Wand des Hohlschafts 2 angeordnet. Die Befestigungsschraube 10 ist eine Holzschraube, deren Schraubenkopf 9 und ein hinterer Abschnitt im Hohlschaft 2 des Dämmstoffhalters 1 aufgenommen ist und die vorn aus dem Hohlschaft 2 heraussteht. Der Schraubenkopf 9 liegt auf der konischen Ringfläche 3 im Hohlschaft 2 auf. Sofern die Rückbewegungssperren 6 nicht wie in Figur 1 dargestellt sich seitlich außerhalb des Kopfs 9 der Befestigungsschraube 10 befinden, werden sie beim Einbringen der Befestigungsschraube 10 von dieser zur Seite gedrückt, bis sie einschließlich ihres Schraubenkopfs 9 an den Abwinklungen 8 der Rückbewegungssperren 6 vorbeigetreten ist.

Der Dämmstoffhalter 1 ist zur Befestigung einer Dämmstoffplatte, Dämmstoffmatte oder dgl. an einem Ankergrund 14, beispielsweise einer Gebäudewand vorgesehen. Im dargestellten Ausführungsbeispiel ist die Dämmstoffplatte 13 eine Holzfaserplatte. Der Dämmstoffhalter 1 wird durch ein vorbereitetes Bohrloch 15 in die Dämmstoffplatte 13 eingebracht. Durch Einschrauben der Befestigungsschraube 10 in den Ankergrund 14 wird der Hohlschaft 2 in das Bohrloch 15 der Dämmstoffplatte 13 eingezogen, bis - wie in Figur 2 zu sehen - der Halteteller 4 auf der Dämmstoffplatte 13 aufliegt. Zur Verankerung in Beton wird die Befestigungsschraube 10 in einen Dübel 16 eingeschraubt. Besteht der Ankergrund 14 beispielsweise aus Holz, kann die Befestigungsschraube 10 ohne Dübel eingeschraubt werden.

Die widerhakenförmigen Anker 11 und die seitlich nach außen vorstehenden Rückbewegungssperren 6 halten den Dämmstoffhalter 1 gegen Mitdrehen mit der Befestigungsschraube 10. Eine Wand des Bohrlochs 15 in der Dämmstoffplatte 13 an der die Schäfte 7 der Rückbewegungssperren 6 beim Einziehen in das Bohrloch 15 entlanggleiten, drückt die Rückbewegungssperren 6 nach innen, so dass sich - wie in Figuren 2 und 3 zu sehen - die Schäfte 7 in der Wand des Hohlschafts 2 befinden und die Abwinklungen 8 nach innen stehen. Dabei hintergreifen die Abwinklungen 8 der Rückbewegungssperren 6 den Schraubenkopf 9 der Befestigungsschraube 10. Der Schraubenkopf 9 ist zwischen der konischen Ringfläche 3 des Hohlschafts 2 und den Abwinklungen 8 der Rückbewegungssperren 6 axial im Hohlschaft 2 gehalten. Die Befestigungsschraube 10 ist drehbar im Hohlschaft 2.

Durch Zurückdrehen der Befestigungsschraube 10 um eine oder wenige Umdrehungen wird der Dämmstoffhalter 1 vom Ankergrund 14 und mit dem Dämmstoffhalter 1 die Dämmstoffplatte 13 vom Ankergrund 14 entfernt. Aufgrund der widerhakenförmigen Anker 11, die beim Einziehen des Hohlschafts 2 in die Dämmstoffplatte 13 oder spätestens bei der Rückbewegung in die Dämmstoffplatte 13 eindringen, ist der Dämmstoffhalter 1 in der Dämmstoffplatte 13 verankert, d.h. die Dämmstoffplatte 13 ist axial in beiden Richtungen am Dämmstoffhalter 1 fixiert. Ebenso ist die Befestigungsschraube 10 durch die Rückbewegungssperren 6, die den Schraubenkopf 9 hintergreifen, und die konische Ringfläche 3, an der der Schraubenkopf 9 anliegt, axial im Hohlschaft 2 fixiert. Durch Herausdrehen der Befestigungsschraube 10 um eine oder einige Umdrehungen lässt sich somit ein Abstand der Dämmstoffplatte 13 vom Ankergrund 14 einstellen, wie es in Figur 3 dargestellt ist. Abschließend wird der Hohlschaft 2 mit einer am Dämmstoffhalter 1 anhängenden Kugel 17 oder auch einem sonstigen Verschlussteil verschlossen.

### Bezugszeichenliste

### Dämmstoffhalter

- 1: Dämmstoffhalter
- 2: Hohlschaft
- 3: konische Ringfläche
- 4: Halteteller
- 5: Aussparung
- 6: Rückbewegungssperre
- 7: Schaft
- 8: Abwinklung
- 9: Schraubenkopf
- 10: Befestigungsschraube
- 11: Anker
- 12: Fenster
- 13: Dämmstoffplatte
- 14: Ankergrund
- 15: Bohrloch
- 16: Dübel
- 17: Kugel

## Patentansprüche

1. Dämmstoffhalter, mit einem Hohlschaft (2) zur Aufnahme einer Befestigungsschraube (10), wobei der Hohlschaft (2) eine Rückbewegungssperre (6) aufweist, die die im Hohlschaft (2) aufgenommene Befestigungsschraube (10) gegen eine Bewegung aus dem Hohlschaft (2) heraus sperrt,
- wobei der Hohlschaft (2) einen Anker (11) an seiner Außenseite aufweist, der den Hohlschaft (2) in einer Dämmstoffplatte (13) verankert,
- wobei die Befestigungsschraube (10) im Hohlschaft (2) drehbar ist, derart,
- dass der Dämmstoffhalter (1) sich nicht mit der im Hohlschaft (2) aufgenommenen Befestigungsschraube (10) mitdreht,
- wobei der Hohlschaft (2) einen Halteteller (4) zu einem Übergreifen der Dämmstoffplatte (13) auf deren einem Ankergrund (14) abgewandten Außenseite und zum Halten der Dämmstoffplatte (13) am Ankergrund (14) aufweist,
- wobei die Rückbewegungssperre (6) in einer nicht-sperrenden Stellung seitlich aus dem Hohlschaft (2) vorsteht und beim Eindringen des Hohlschafts (2) in die Dämmstoffplatte (13) von der Dämmstoffplatte (13) in den Hohlschaft (2) in eine sperrende Stellung gedrückt-wird, in der-sie die im Hohlschaft (2) aufgenommene Befestigungsschraube (10) gegen die Bewegung aus dem Hohlschaft (2) heraus sperrt,
- wobei die Rückbewegungssperre (6) in der sperrenden Stellung einen Schraubenkopf (9) der im Hohlschaft (2) aufgenommenen Befestigungsschraube (10) hintergreift, und
- wobei die Rückbewegungssperre (6) hakenförmig und in einer Öffnung (12) einer Wand des Hohlschafts (2) des Dämmstoffhalters (1) angeordnet ist, so dass sie in die sperrende Stellung in den Hohlschaft (2) hinein und in die nichtsperrende Stellung aus dem Hohlschaft (2) heraus bewegbar ist.

2. Dämmstoffhalter nach Anspruch 1, **dadurch gekennzeichnet, dass** die Rückbewegungssperre (6) einstückiger Bestandteil des Hohlschafts (2) des Dämmstoffhalters (1) ist.

## Claims

1. Insulation holder, having a hollow shank (2) for receiving a fastening screw (10), the hollow shank (2) having a no-backward-movement device (6) which locks the fastening screw (10) received in the hollow shank (2) against movement out of the hollow shank (2),
- wherein the hollow shank (2) has, on its outside, an anchor (11) which anchors the hollow shank (2) in an insulation panel (13),
- wherein the fastening screw (10) is rotatable in the hollow shank (2) in such a way that the insulation holder (1) does not co-rotate with the fastening screw (10) received in the hollow shank (2),
- wherein the hollow shank (2) has a holding plate (4) for engaging over the insulation panel (13) on its outer side remote from an anchoring substrate (14) and for holding the insulation panel (13) against the anchoring substrate (14),
- wherein in a non-locking position the no-backward-movement device (6) projects laterally from the hollow shank (2) and, on penetration of the hollow shank (2) into the insulation panel (13), is pressed by the insulation panel (13) into the hollow shank (2) into a locking position in which it locks the fastening screw (10) received in the hollow shank (2) against movement out of the hollow shank (2),
- wherein in the locking position the no-backward-movement device (6) engages behind a screw head (9) of the fastening screw (10) received in the hollow shank (2), and
- wherein the no-backward-movement device (6) is hook-like and is arranged in an opening (12) in a wall of the hollow shank (2) of the insulation holder (1), so that it is movable into the hollow shank (2) into the locking position and out of the hollow shank (2) into the non-locking position.

2. Insulation holder according to claim 1, **characterized in that** the no-backward-movement device (6) is an integral component of the hollow shank (2) of the insulation holder (1).

## Revendications

1. Dispositif de fixation ou de maintien pour matériau isolant, comprenant une tige creuse (2) destinée à recevoir une vis de fixation ou de maintien (10), la tige creuse (2) comportant un moyen de blocage de mouvement de recul (6) qui interdit à une vis de fixation (10) reçue dans la tige creuse (2) tout mouvement de sortie de la tige creuse (2),
- dans lequel la tige creuse (2) comporte un élément d'ancrage (11) sur son côté extérieur, lequel ancre la tige creuse (2) dans une plaque de matériau isolant (13),
- dans lequel la vis de fixation (10) peut tourner dans la tige creuse (2) de telle manière que le dispositif de fixation pour matériau isolant (1) ne tourne pas avec la vis de fixation (10) reçue dans la tige creuse (2),
- dans lequel la tige creuse (2) comporte un disque de retenue (4) destiné à recouvrir la plaque de matériau isolant (13) sur son côté extérieur opposé à un fond d'ancrage (14) et à maintenir la plaque de matériau isolant (13) sur le fond d'ancrage (14),
- dans lequel l'élément de blocage de mouvement de recul (6), dans une position non bloquante, fait saillie latéralement de la tige creuse (2) et, lorsque la tige creuse (2) pénètre dans la plaque de matériau isolant (13), est pressé par la plaque de matériau isolant (13) dans la tige creuse (2), dans une position bloquante dans laquelle il interdit à la vis de fixation (10) reçue dans la tige creuse (2) tout mouvement de sortie de la tige creuse (2),
- dans lequel l'élément de blocage de mouvement de recul (6), dans la position bloquante, s'engage derrière une tête de vis (9) de la vis de fixation (10) reçue dans la tige creuse (2), et
- dans lequel l'élément de blocage de mouvement de recul (6) est en forme de crochet et disposé dans une ouverture (12) d'une paroi de la tige creuse (2) du dispositif de fixation pour matériau isolant (1), de sorte qu'il peut être inséré dans la tige creuse (2) dans la position bloquante et être retiré de la tige creuse (2) dans la position non bloquante.

2. Dispositif de fixation pour matériau isolant selon la revendication 1, **caractérisé en ce que** l'élément de blocage de mouvement de recul (6) est un élément constitutif réalisé d'une seule pièce de la tige creuse (2) du dispositif de fixation pour matériau isolant (1).
